# EUROPEAN PATENT APPLICATION

(11) **EP 1 640 882 A2**
(43) Date of publication of application: **29.03.2006**
(21) Application number: 05108253.5
(22) Date of filing: 08.09.2005
(51) Int. Cl.: G06F 17/30

(54) **System and method for customising and sharing search preferences**

(30) Priority: 24.09.2004 US 948230
(71) Applicant: MICROSOFT CORPORATION, Redmond, Washington 98052-6399 (US)
(72) Inventor: Shakib, Darren A., Redmond, WA 98052 (US); Hamilton, Nicole A., Redmond, WA 98052 (US); Naam, Ramez, Redmond, WA 98052 (US)
(74) Representative: Grünecker, Kinkeldey, Stockmair & Schwanhäusser Anwaltssozietät

(57) **Abstract**

A system and method are provided for implementing a search engine to output search results scored for a particular user. The method includes receiving a set of input user search terms and accessing a set of input user preferences. The method additionally includes obtaining scored search results based on the set of search terms and the set of input user preferences. A method is additionally provided for sharing user search preferences for input to a search engine. The method includes storing a set of input user preferences. The input user preferences provide criteria for a search engine to perform ranking of a set of search results. The method additionally includes providing an access mechanism for allowing access to the stored set of input user preferences by a third party.

## Description

### CROSS-REFERENCE TO RELATED APPLICATIONS

None.

### STATEMENT REGARDING FEDERALLY SPONSORED RESEARCH OR DEVELOPMENT

None.

### TECHNICAL FIELD

Embodiments of the present invention relate to a system and method for setting and sharing scoring parameters. More particularly, embodiments of the invention relate to a technique for setting scoring parameters to determine an output order of search results produced by a search engine based on user preferences.

### BACKGROUND OF THE INVENTION

Computer searching, particularly over the Internet, has become a widespread technique for seeking information. In order to seek information, users typically input terms to a search engine. The search engine typically performs two functions including (1) finding matching documents and (2) scoring the matching documents to determine a display order. The search engines typically order or rank the results based on the similarity of the terms found to the terms input by the user. Results that show identical words and word order with the request input by the user will typically be given a high rank and will be placed near the top of the list presented to the user.

Scoring performed by different search engines takes into account various factors including whether a match was found in the title, the importance of the match, the importance of a phrase match, and other factors determined by the search engine. Parameters that work well for one kind of search may not work well for all searches and parameters that work some users may not work well others. Accordingly, a problem with most currently known techniques is the failure to allow users to sufficiently tailor their requests so that the results will be output in an appropriate order of relevance.

User satisfaction is a critical success factor for a search engine. Accordingly, a solution is needed that allows a user to customize the behavior of a search engine to meet his or her needs. A solution is also needed that allows users to share that customization with other like-minded users. Personalizing the data presented by a web search engine in an effective manner could dramatically improve the user search experience, thus boosting customer loyalty.

### BRIEF SUMMARY OF THE INVENTION

Embodiments of the present invention include a method for implementing a search engine to output search results scored for a particular user. The method includes receiving a set of input user search terms and accessing a set of input user preferences. The method additionally includes obtaining scored search results based on the set of search terms and the set of input user preferences.

In a further aspect of the invention, a method is provided for sharing user search preferences for input to a search engine. The method includes storing a set of input user preferences. The input user preferences provide criteria for a search engine to perform ranking of a set of search results. The method additionally includes providing an access mechanism for allowing access to the stored set of input user preferences by a third party.

In an additional aspect, a method is provided for implementing a search engine to score search results for a web site having searchable data. The method includes receiving a set of input user search terms and accessing a set of web site preferences. The method additionally includes obtaining scored search results from the web site data based on the set of input user search terms and the set of input web site preferences.

In yet a further aspect of the invention, a system is provided for customizing search preferences for a set of search terms input to a search engine. The system includes a user input interface for allowing a user to input a set of search terms and a set of user preferences. The system additionally includes ranking tools for ranking search results obtained by searching the input set of search terms. The ranking tools rank the search results based on the input set of user preferences. The system additionally includes an ordered results output component for outputting ranked search results to the user.

### BRIEF DESCRIPTION OF THE DRAWINGS

The present invention is described in detail below with reference to the attached drawings figures, wherein:

FIG. 1 is a block diagram illustrating an overview of a system in accordance with an embodiment of the invention;

FIG. 2 is block diagram illustrating an overview of the system in accordance with an alternative embodiment of the invention;

FIG. 3 is a is a block diagram illustrating a computerized environment in which embodiments of the invention may be implemented;

FIG. 4 is a block diagram illustrating user search customization components in accordance with an embodiment of the invention;

FIG. 5 is a flow chart illustrating a method for customizing preferences in accordance with an embodiment of the invention; and

FIG. 6 is a flow chart illustrating a method for customizing preferences in accordance with an alternative embodiment of the invention.

### DETAILED DESCRIPTION OF THE INVENTION

**I. System Overview**

Embodiments of the invention include a method and system for allowing a user to customize a search and to share the customization. Accordingly, the system provides a mechanism for inputting preferences and a mechanism for saving and sharing the input preferences. Preferences may be input using a plurality of techniques including embedding the preferences as part of the query string, storing a customization file on a user's machine, or through a graphical user interface component. For sharing purposes, these preferences may be stored on the user computer, at the search engine, or at an alternative location.

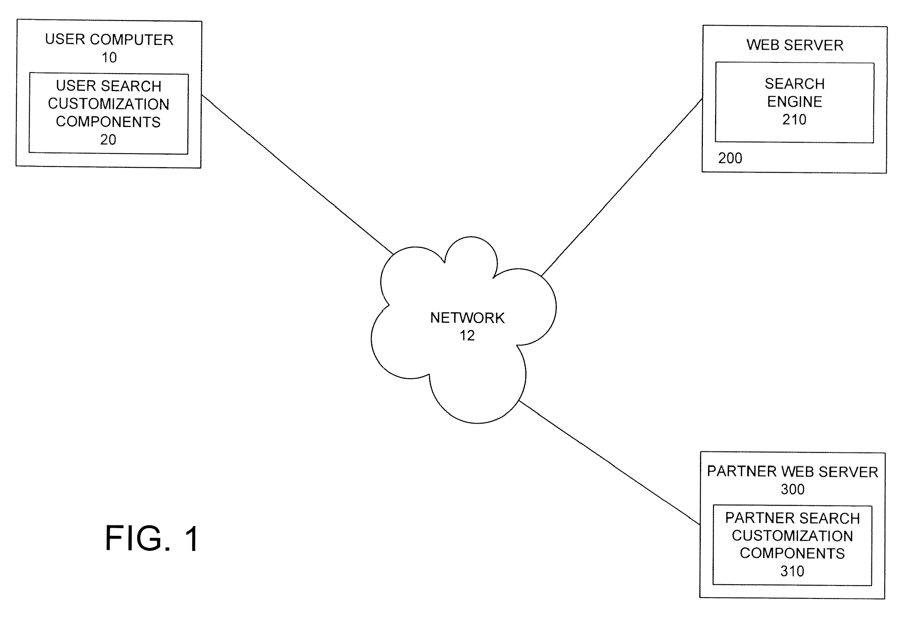

As illustrated in FIG. 1, a user computer 10 may include user search customization components 20. The user computer 10 may be connected over a network 12, such as the Internet, with a web server 200. The web server 200 preferably includes a search engine 210. A partner web server 300 may also be connected over the network 12 and may include partner search customization components 310. The partner 300 is preferably a third party search partner of the web server 200 having the search engine 210. Accordingly, the third party partner 300 can implement partner search customization components to customize all searches performed by users on a partner web site. For instance, the partner web server 300 may want results ordered based on an author name, the date of an article, or other factors.

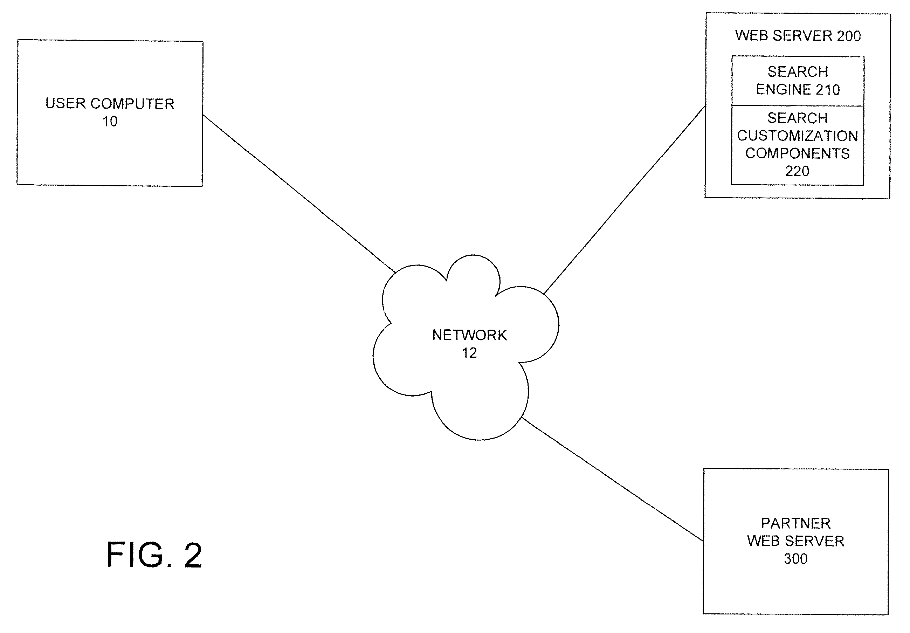

FIG. 2 illustrates an alternative embodiment in which a user computer 10, a web server 200, and a partner web server 300 are connected over a network 12. The web server 200 may include a search engine 210 and search customization components 220. In the embodiment shown in FIG. 2, the search customization components 220 may include components enabling customization and sharing of a user search from the user computer 10. The search customization components may also include components for enabling customization from the partner web server 300. The customization components illustrated in FIGs. 1 and 2 will be further described below in conjunction with the method and system of the invention.

**II. Exemplary Operating Environment**

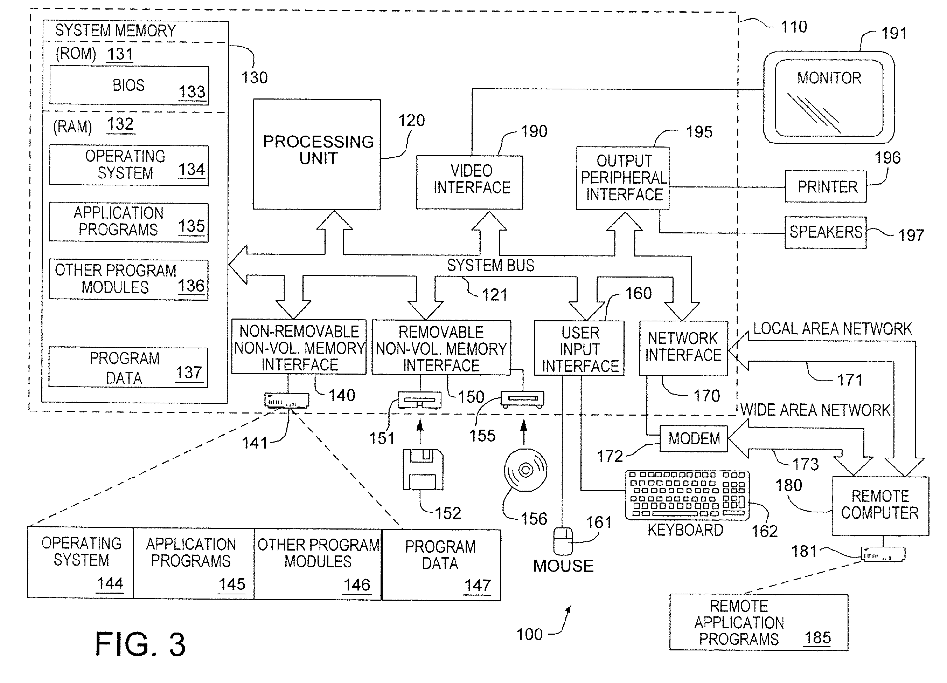

FIG. 3 illustrates an example of a suitable computing system environment 100 on which the user search customization components may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is described in the general context of computer-executable instructions, such as program modules, being executed by a computer. Generally, program modules include routines, programs, objects, components, data structures, etc. that perform particular tasks or implement particular abstract data types. Moreover, those skilled in the art will appreciate that the invention may be practiced with other computer system configurations, including hand-held devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote computer storage media including memory storage devices.

With reference to FIG. 3, the exemplary system 100 for implementing the invention includes a general purpose-computing device in the form of a computer 110 including a processing unit 120, a system memory 130, and a system bus 121 that couples various system components including the system memory to the processing unit 120.

Computer 110 typically includes a variety of computer readable media. By way of example, and not limitation, computer readable media may comprise computer storage media and communication media. The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 3 illustrates operating system 134, application programs 135, other program modules 136, and program data 137.

The computer 110 may also include other removabler/nonremovable, volatile/nonvolatile computer storage media. By way of example only, FIG. 3 illustrates a hard disk drive 141 that reads from or writes to nonremovable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/nonremovable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through an non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 3, provide storage of computer readable instructions, data structures, program modules and other data for the computer 110. In FIG. 3, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 in the present invention will operate in a networked environment using logical connections to one or more remote computers, such as a remote computer 180. The remote computer 180 may be a personal computer, and typically includes many or all of the elements described above relative to the computer 110, although only a memory storage device 181 has been illustrated in FIG. 3. The logical connections depicted in FIG. 3 include a local area network (LAN) 171 and a wide area network (WAN) 173, but may also include other networks.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 3 illustrates remote application programs 185 as residing on memory device 181. It will be appreciated that the network connections shown are exemplary and other means of establishing a communications link between the computers may be used.

Although many other internal components of the computer 110 are not shown, those of ordinary skill in the art will appreciate that such components and the interconnection are well known. Accordingly, additional details concerning the internal construction of the computer 110 need not be disclosed in connection with the present invention.

**III. System and Method of the Invention**

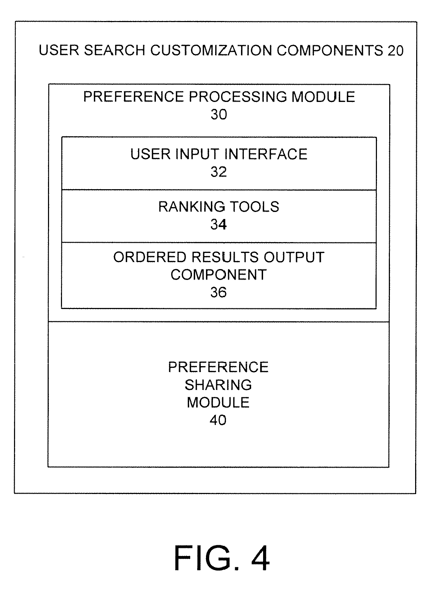

As set forth above, FIGs. 1 and 2 each illustrate an embodiment of a system for implementing search customization components. FIG. 4 illustrates the user search customization components 20 in accordance with an embodiment of the invention. The user search customization components 20 may include a preference processing module 30 and a preference sharing module 40.

The preference processing module 30 may include a user interface 32, ranking tools 34, and an ordered results output component 36. The user interface 32 may accept input from a user in several different ways. A user may input preferences as an embedded portion of a search query string, using a customization file on the user computer 10, or through a graphical component on a user interface.

Suitable graphical components may include an equalizer-style arrangement of sliders for the various parameters or a form with checkboxes. With sliders on the user interface, each slider may correspond to each search term. Accordingly, a user could position the slider to one end of a scale or an opposite end of a scale to indicate the importance of the term. The weighting could be based on percentages from zero to one hundred percent.

If the user interface 32 allows entry of a query string, the user may be permitted to embed weights in the query string to indicate the relative importance of each search term. Another option for customization is to allow a user to weight a term if the term is present, without including the term as a search parameter. For instance, the user could perform a search on "the brown fox", and weight the term "jump" only if "jump is included in the text of the documents retrieved in the search. Furthermore, the user may want only documents published before or after a certain date or having a specific file type.

With any type of user interface 32, the user may also be able to indicate where to look for the terms. For instance, the user may search for the terms in the title, the body of the text, in a URL, or in data identifying a document

Ranking tools 34 rank search results based on the input preferences. As set forth above, the input preferences may include multiple terms, with some terms weighted more heavily than others. Furthermore, weighting may be performed with query independent features such as the length of a URL, age of a document, or file type. The search may also be based on query dependent features of a document derived from the query terms. In particular, query dependent features would specify where to look for the terms, such as in the body, title, URL, or links and how the terms should appear, such as in an exact phrase replication or as disconnected words. The search could also include a mix of the above three categories (weighting of terms, query dependent features, and query independent features). Finally, the search could be applied to a particular structured field. For instance, the search could include a structured data search for timing and rank based on particular structured field such as XML or metatags.

The preference sharing module 40 allows a user to share the customization created by the preference processing module. The preference sharing module 40 allows publish of a user customization so that the user may expose the customization to others. The preference sharing module 40 may allow a user to create a URL that others could access. In order to implement the preference sharing module 40, the user first implements the customization experience through the preference processing module 30. The user's customization experience is then stored on the user computer 10, at a search engine web server, or at another alternative location.

Users having appropriate credentials may access the stored customization experience. Thus the preference sharing module 40 may include an authentication component for authenticating users. The user setting up the preferences could regulate the required authentication data. Authentication credentials may allow users to access and/or modify the preferences stored in the preference sharing module 40. In order to provide access for publication, the user sharing preferences may insert a search box on the user's web site that points to a URL or the user may send the appropriate URL or file to authorized users. The preference sharing module 40 provides a social networking feature. Preferences within online groups and communities may, through the preference sharing module 40, be easily shared among the members.

As set forth above, preferences might be stored on the user computer 10 or at the search engine. If on the user computer, the settings could be shared by sharing the stored file. If stored on the search engine, sharing would be accomplished by allowing the user to name the settings and share them by name. Users could find each other's shared search spaces through a list or other mechanism for navigating from person to person. From a user's search space, visitors could make use of a user's search settings, could see the user's favorite queries, and could see the user's favorite results for those queries.

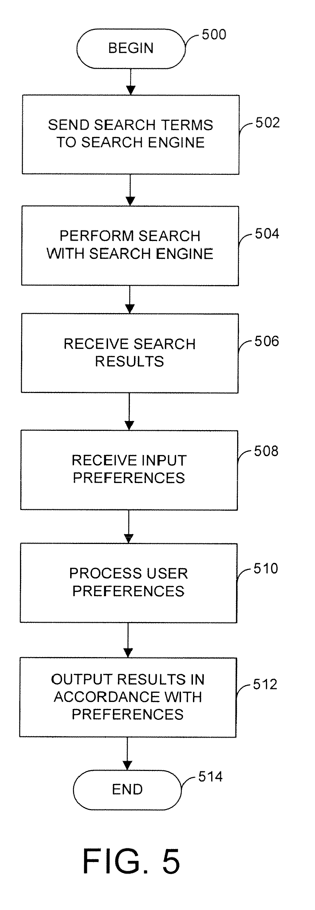

FIG. 5 illustrates a method for processing a search in accordance with an embodiment of the invention. The method begins at step 500 and the search terms are sent to the search engine in step 502. In step 504, the user computer 10 receives the search results from the search engine. In step 506, the ranking mechanism processes user preferences. In step 508, the ordered results output component outputs search results to the user in ranked order. The process ends in step 510.

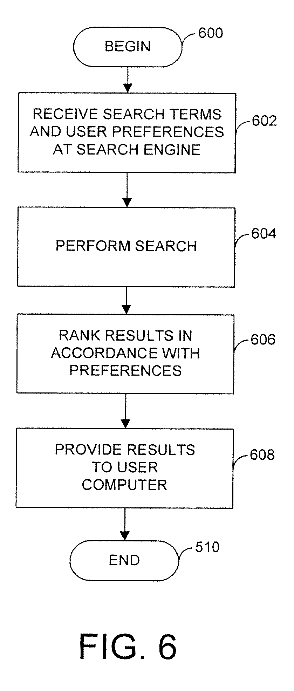

FIG. 6 illustrates a method for processing a search in accordance with an alternative embodiment of the invention illustrated in FIG. 2. The process begins in step 600. The search engine 210 receives the search terms and user preferences at step 602. Some user preferences may be stored at the search engine 210 and others may be transmitted along with key search terms from the user computer 10. In step 604, the search engine 604 performs the requested search. In step 606, the ranking tools 34 rank the results in accordance with user preferences. In step 608, the search engine 210 provides ranked results to the user computer 10.

FIGs. 5 and 6 illustrate methods that may be implemented in a first embodiment in which the user search customization components are stored on a user computer and in a second embodiment in which the user search customization components are stored on the search engine web server. Other embodiments are within the scope of the invention, which include locating some features of the user search customization components on the user computer and other features of the user search customization components on the web server 200.

Furthermore, the location of the partner search customization components is not dependent on the location of the user search customization components. The partner search customization components may be located on either the partner web server or the user computer regardless of the location of the user search customization components. In order to customize search results for a partner site having searchable data, the method includes receiving a set of input user search terms and accessing a set of partner web site search preferences. The method additionally includes obtaining scored search results from the partner web site searchable data based on the set of input user search terms and the set of input partner web site preferences.

Furthermore, although typically a user will get one set of results based on input search terms and preferences, the user may also allow the search engine to output an initial set of results based on the search terms and then re-sort the results based on subsequently input preferences. In other embodiments, the user may alter preferences after receiving a first set of results in order to improve or alter the sort order of the results set.

As set forth above, the search customization components of the invention perform ranking or scoring based on a number of factors. The invention allows a user to customize the behavior of the search engine to his own needs and share that customization with like minded users. The user can improve his own results according to his personal definition of the best results. Additionally, the fact that a user could then share his customized settings allows users to form communities of users with similar preferences.

While particular embodiments of the invention have been illustrated and described in detail herein, it should be understood that various changes and modifications might be made to the invention without departing from the scope and intent of the invention. The embodiments described herein are intended in all respects to be illustrative rather than restrictive. Alternate embodiments will become apparent to those skilled in the art to which the present invention pertains without departing from its scope.

From the foregoing it will be seen that this invention is one well adapted to attain all the ends and objects set forth above, together with other advantages, which are obvious and inherent to the system and method. It will be understood that certain features and sub-combinations are of utility and may be employed without reference to other features and sub-combinations. This is contemplated and within the scope of the appended claims.

## Claims

1. A method for implementing a search engine to output search results scored for a particular user, the method comprising:
receiving a set of input user search terms;
accessing a set of input user preferences; and
obtaining scored search results based on the set of search terms and the set of input user preferences.

2. The method of claim 1, wherein accessing a set of input user preferences comprises accessing a set of weightings for application to the user search terms.

3. The method of claim 1, wherein accessing a set of input user preferences comprises accessing a set of weightings for application to searchable document characteristics.

4. The method of claim 3, wherein the weightings for application to searchable document characteristics comprise weightings applicable to a document format.

5. The method of claim 3, wherein the weightings for application to searchable document characteristics comprise weightings applicable to a document portion, wherein searchable terms are given greater weight when found in a weighted document portion.

6. The method of claim 1, further comprising accepting user preference input in a query string.

7. The method of claim 1, further comprising accepting input of user preferences using sliders on a user interface.

8. The method of claim 1, further comprising accepting input of user preferences using checkboxes on a user interface.

9. The method of claim 1, further comprising providing a mechanism for sharing of input user preferences.

10. The method of claim 9, wherein providing a mechanism for sharing of user input preferences comprises providing a URL to a set of authorized users for sharing input user preferences.

11. The method of claim 9, wherein providing a mechanism for sharing of user input preferences comprises providing access to a storage area for a set of authorized users for sharing input user preferences.

12. A computer readable medium storing computer executable instructions for performing the method of claim 1.

13. A method for sharing user search preferences for input to a search engine, the method comprising:
storing a set of input user preferences, the input user preferences providing criteria for a search engine to perform ranking of a set of search results; and
providing an access mechanism for allowing access to the stored set of input user preferences by a third party.

14. The method of claim 13, wherein providing an access mechanism comprises providing a URL to a set of authorized users for sharing input user preferences.

15. The method of claim 13, wherein providing an access mechanism comprises providing access to a storage area for a set of authorized users for sharing input user preferences.

16. The method of claim 13, wherein storing a set of input user preferences comprises storing a set of weightings for application to search terms.

17. The method of claim 13, wherein storing a set of input user preferences comprises storing a set of weightings for application to searchable document characteristics.

18. The method of claim 13, further wherein storing a set of input user preferences comprises storing weightings for application to searchable document characteristics.

19. The method of claim 13, further comprising accepting user preference input in a query string.

20. The method of claim 13, further comprising accepting input of user preferences using sliders on a user interface.

21. The method of claim 13, further comprising accepting input of user preferences using checkboxes on a user interface.

22. A computer readable medium storing computer executable instructions for performing the method of claim 13.

23. A method for implementing a search engine to score search results for a web site having searchable data, the method comprising:
receiving a set of input user search terms;
accessing a set of web site preferences; and
obtaining scored search results from the web site data based on the set of input user search terms and the set of input web site preferences.

24. The method of claim 23, wherein accessing a set of web site preferences comprises accessing a set of weightings for application to the user search terms.

25. The method of claim 23, wherein accessing a set of web site preferences comprises accessing a set of weightings for application to searchable document characteristics.

26. The method of claim 23, further comprising accepting web site preferences using sliders on a user interface.

27. The method of claim 23, further comprising accepting input of web site preferences using checkboxes on a user interface.

28. A computer readable medium storing computer executable instructions for performing the method of claim 23.

29. A system for customizing search preferences for a set of search terms input to a search engine, the system comprising:
a user input interface for allowing a user to input a set of search terms and a set of user preferences;
ranking tools for ranking search results obtained by searching the input set of search terms, the ranking tools ranking the search results based on the input set of user preferences; and
an ordered results output component for outputting ranked search results to the user.

30. The system of claim 29, further comprising a preference sharing module for allowing sharing of input user preferences with multiple users.

31. A method for ranking search engine results for a particular user as a result of a user query, and the method comprising:
accessing a preference processing module including ranking tools and an ordered results output component; and
implementing the ranking tools to evaluate user preferences entered into the system by the particular user, wherein implementing the ranking tools comprises evaluating any query dependent preferences and any query independent preferences.

32. The method of claim 31, wherein evaluating query dependent preferences comprises applying weighting factors entered in a user query to search terms within the user query.

33. The method of claim 31, wherein evaluating query dependent preferences includes evaluating preferences that specify a document portion.

34. The method of claim 31, wherein evaluating query independent features includes evaluating at least one of URL length, document age, and file type.

35. The method of claim 31, further comprising providing an input interface for allowing a user to enter preferences.

36. The method of claim 35, wherein providing an input interface comprises providing sliders on a user interface.

37. The method of claim 35, wherein providing an input interface comprises providing checkboxes on a user interface.

38. The method of claim 35, further comprising providing a mechanism for sharing of input user preferences.

39. The method of claim 38, wherein providing a mechanism for sharing of user input preferences comprises providing a URL to a set of authorized users for sharing input user preferences.

40. The method of claim 38, wherein providing a mechanism for sharing of user input preferences comprises providing access to a storage area for a set of authorized users for sharing input user preferences.

41. A computer readable medium storing computer executable instructions for performing the method of claim 31.
